Europäisches Patentamt

European Patent Office

Office européen des brevets

(19)

(11) **EP 0 973 692 B1**

(12) **FASCICULE DE BREVET EUROPEEN**

(45) Date de publication et mention
de la délivrance du brevet:
**14.11.2001 Bulletin 2001/46**

(21) Numéro de dépôt: **98920513.3**

(22) Date de dépôt: **02.04.1998**

(51) Int Cl.[7]: **C01D 3/14**

(86) Numéro de dépôt international:
**PCT/EP98/02132**

(87) Numéro de publication internationale:
**WO 98/46527 (22.10.1998 Gazette 1998/42)**

(54) **PROCEDE D'ENRICHISSEMENT DE SEL BRUT**

VERFAHREN ZUR ANREICHERUNG VON ROHSALZ

METHOD FOR ENRICHING RAW SALT

(84) Etats contractants désignés:
**DE ES FR GB IT**

(30) Priorité: **11.04.1997 FR 9704587**

(43) Date de publication de la demande:
**26.01.2000 Bulletin 2000/04**

(73) Titulaire: **SOLVAY (Société Anonyme)**
**1050 Bruxelles (BE)**

(72) Inventeur: **NINANE, Léon**
**F-54110 Dombasle-sur-Meurthe (FR)**

(74) Mandataire: **Dufrasne, Eugène et al**
**Solvay S.A.,**
**Département Propriété Industrielle,**
**310, rue de Ransbeek**
**1120 Bruxelles (BE)**

(56) Documents cités:
**WO-A-89/03364      US-A- 3 655 333**
**US-A- 4 094 956      US-A- 4 997 637**

• **CHEMICAL ABSTRACTS, vol. 80, no. 10, 11 mars
1974 Columbus, Ohio, US; abstract no. 49909,
PEREZ AGUADO, AGUSTIN: "Treatment of
sodium chloride" XP002050435 & ES 388 557 A
(PEREZ AGUADO, AGUSTIN)**
• **CHEMICAL ABSTRACTS, vol. 84, no. 4, 26
janvier 1976 Columbus, Ohio, US; abstract no.
19843, BALAREV, KH. KH. ET AL: "Preparation
of pure sodium chloride" XP002050436 & KHIM.
IND. (SOFIA) (1975), 47(5), 204-6 CODEN:
KINSAF, 1975,**

**Description**

L'invention concerne un procédé pour enrichir du sel brut.

Elle concerne en particulier un procédé pour l'obtention, au départ de sel brut, de sel enrichi en chlorure de sodium, de pureté suffisante pour permettre son utilisation dans un procédé industriel ou en alimentation.

Le sel industriel et le sel alimentaire sont habituellement obtenus au départ de sel minéral, que l'on trouve à l'état solide naturel dans l'écorce terrestre (le sel gemme) ou que l'on obtient par évaporation d'eaux saumâtres naturelles telles que l'eau de mer ou l'eau de lacs salés. Le sel minéral brut contient habituellement plus de 80 % (généralement plus de 90 %) en poids de chlorure de sodium. Dans le sel minéral brut, le chlorure de sodium est accompagné d'impuretés, notamment des sels de calcium, de magnésium et de potassium (habituellement des sulfates et/ou des chlorures) et des oxydes de fer. Ces impuretés rendent le sel minéral brut impropre, tel quel, à la plupart des utilisations industrielles ou en alimentation.

Dans le brevet Etats-Unis 3 655 333 on propose un procédé permettant d'obtenir du chlorure de sodium de grande pureté au départ de sel brut, selon lequel on disperse le sel brut dans une solution saturée de chlorure de sodium, on refroidit la suspension aqueuse ainsi obtenue, au-dessous de 0°C pour cristalliser du chlorure de sodium dihydraté, on recueille les cristaux de chlorure de sodium dihydraté, et on les lave avec une solution aqueuse pure de chlorure de sodium. Dans ce procédé connu, le lavage des cristaux de chlorure de sodium dihydraté est une opération difficile, dont l'efficacité n'est pas garantie. Elle implique la mise en oeuvre d'une solution aqueuse pure de chlorure de sodium qui est ensuite rejetée, ce qui constitue une perte et grève le prix du chlorure de sodium produit.

L'invention vise à remédier à ces inconvénients du procédé connu décrit plus haut, en fournissant un procédé nouveau permettant d'obtenir du chlorure de sodium de grande pureté au départ de sel brut, sans nécessiter une étape de lavage de cristaux.

L'invention concerne dès lors un procédé d'enrichissement de sel brut, selon lequel on soumet le sel brut à un refroidissement dans une solution aqueuse saturée de chlorure de sodium, à une température inférieure à la température de transition du chlorure de sodium anhydre et du chlorure de sodium dihydraté et on recueille, à l'issue du refroidissement, un brouet d'une poudre comprenant des cristaux de chlorure de sodium, le procédé se caractérisant par le fait que l'on soumet le sel brut à un broyage avant de le refroidir et on soumet la poudre à un fractionnement granulométrique duquel on recueille une fraction granulométrique fine et une fraction granulométrique grossière comprenant le sel enrichi.

Le sel brut concerné par le procédé selon l'invention est une substance solide constituée de chlorure de sodium et d'impuretés, existant à l'état naturel (sel d'origine minérale) ou formant un résidu d'un procédé industriel. Le sel gemme, le sel marin obtenu par évaporation solaire d'eau de mer et le sel provenant de l'évaporation de saumures obtenues par dissolution de sel gemme in situ dans un gisement constituent des exemples de sel brut d'origine minérale. Un autre exemple de sel brut entrant dans le cadre de l'invention est celui qui est produit à l'état de résidu dans les procédés d'épuration des fumées contenant du chlorure d'hydrogène, au moyen de bicarbonate de sodium [SOLVAY (Société Anonyme), brochure Br 1566a-B-1-0396]. La teneur pondérale du sel brut en chlorure de sodium est généralement supérieure à 80 %, habituellement d'au moins 90 % (fréquemment d'au moins 95 %).

Dans le procédé selon l'invention, le broyage du sel brut est réalisé à une température supérieure à la température de transition du chlorure de sodium anhydre en chlorure de sodium dihydraté, de manière que, dans le sel recueilli à l'issue du broyage, le chlorure de sodium soit présent à l'état de cristaux de chlorure de sodium anhydre. Le broyage est généralement effectué à la température ambiante. Le sel brut recueilli du broyage est soumis à un refroidissement au-dessous de la température de transition du chlorure de sodium anhydre en chlorure de sodium dihydraté. Le refroidissement du sel a pour fonction de recristalliser le chlorure de sodium à l'état de chlorure de sodium dihydraté. Le refroidissement du sel est réalisé dans une solution aqueuse saturée de chlorure de sodium. On peut à cet effet mettre en oeuvre divers modes opératoires. Selon un premier mode opératoire, la solution aqueuse de chlorure de sodium est mise en oeuvre à la température ambiante, le sel brut y est introduit à la température ambiante et la suspension aqueuse résultante est refroidie au-dessous de la température de transition précitée.

Selon un autre mode opératoire, le sel brut se trouvant à la température ambiante, on refroidit d'abord la solution aqueuse saturée de chlorure de sodium à une température inférieure à ladite température de transition, et on introduit ensuite le sel brut dans la solution froide. La température de refroidissement du sel brut broyé est choisie de telle sorte que la recristallisation du chlorure de sodium anhydre en chlorure de sodium dihydraté dans la solution aqueuse saturée de chlorure de sodium se réalise en un temps qui soit acceptable techniquement et économiquement. En pratique, on effectue le refroidissement du sel brut broyé à une température qui est inférieure de plus de 2 °C (de préférence d'au moins 5 °C) par rapport à la température de transition précitée. Le refroidissement du sel brut dans la solution saturée de chlorure de sodium est dès lors généralement effectué à une température inférieure à -2 °C, à la pression atmosphérique normale, les températures situées entre -5 et -15 °C étant spécialement recommandées.

A l'issue du refroidissement, on recueille un brouet aqueux d'une poudre comprenant des cristaux de chlorure de sodium dihydraté. Selon l'invention, ladite poudre est soumise à un fractionnement granulométrique. En variante, avant de soumettre la poudre au fractionnement granulométrique, on chauffe le brouet à une température supérieure à la température de transition précitée, pour recristalliser le chlorure de sodium à l'état anhydre. Dans cette variante d'exécution du procédé selon l'invention, la température du chauffage du brouet est choisie de telle sorte que la recristallisation du chlorure de sodium dihydraté en chlorure de sodium anhydre se réalise en un temps qui soit acceptable techniquement et économiquement. En pratique, on effectue le chauffage du brouet à une température qui est supérieure de plus de 2 °C (de préférence d'au moins 5 °C) par rapport à la température de transition précitée. Le chauffage du brouet est dès lors généralement effectué à une température supérieure à 2 °C, à la pression atmosphérique normale, les températures situées entre 5 et 15 °C étant spécialement recommandées.

Dans le présent mémoire, l'expression "poudre comprenant des cristaux de chlorure de sodium" désigne indifféremment une poudre comprenant des cristaux de chlorure de sodium anhydre ou une poudre comprenant des cristaux de chlorure de sodium dihydraté, selon que l'on met en oeuvre ou non la variante précitée du procédé.

On préfère, selon l'invention, mettre en oeuvre ladite variante d'exécution, de sorte que la poudre que l'on soumet au fractionnement granulométrique est une poudre de cristaux de chlorure de sodium anhydre.

Dans le procédé selon l'invention, les conditions mises en oeuvre au broyage, d'une part, et au refroidissement, d'autre part, sont réglées de manière que les particules du sel brut broyé présentent un diamètre moyen inférieur au diamètre moyen des cristaux de chlorure de sodium dans la poudre du brouet recueilli du refroidissement.

Le diamètre moyen des particules de sel brut (respectivement des cristaux de chlorure de sodium) est défini par la relation mathématique

$$d = \frac{\sum n_j d_j}{\sum n_i}$$

dans laquelle d désigne le diamètre moyen et $n_j$ désigne la fréquence pondérale des particules de sel brut (respectivement des cristaux de chlorure de sodium) de diamètre $d_i$, les diamètres $d_i$ étant mesurés par tamisage selon la norme AFNOR.

Dans le procédé selon l'invention, le fractionnement granulométrique a pour fonction de répartir les particules de la poudre du brouet en deux fractions granulométriques distinctes (une fraction granulométrique grossière contenant le sel enrichi et une fraction granulométrique fine contenant la majorité des impuretés du sel brut). Le fractionnement granulométrique est réglé de telle sorte que le diamètre de coupure des deux fractions granulométriques soit sensiblement égal au diamètre moyen des cristaux de chlorure de sodium de la poudre du brouet, le diamètre de coupure étant, par définition, le diamètre d'ouverture du tamis normalisé de mesure granulométrique (selon la norme AFNOR) qui est traversé par la totalité de la fraction granulométrique fine et qui arrête la totalité de la fraction granulométrique grossière. Pour améliorer le degré de pureté du sel enrichi, on peut sélectionner un diamètre de coupure supérieur au diamètre moyen des cristaux de chlorure de sodium de la poudre du brouet. Toutes autres choses égales, le taux de pureté du sel enrichi est d'autant plus élevé (sa teneur en chlorure de sodium est d'autant plus élevée) que le diamètre de coupure précité est grand. En revanche, la perte de chlorure de sodium dans la fraction granulométrique fine est d'autant plus grande que l'écart entre ces deux diamètres est grand. On peut aussi, à l'opposé, sélectionner un diamètre de coupure légèrement inférieur au diamètre moyen des cristaux de chlorure de sodium, si l'on souhaite réduire la perte en chlorure de sodium, cette réduction se faisant toutefois au détriment de la pureté du sel enrichi. Le diamètre de coupure optimum doit par conséquent être déterminé dans chaque cas particulier en fonction d'un compromis entre le degré de pureté recherché pour le sel et la perte admise en chlorure de sodium. En général, de bons résultats sont obtenus lorsque les particules de sel brut recueillies du broyage présentent un diamètre moyen inférieur à 200 μm, de préférence à 150 μm. Bien qu'en théorie, il n'y ait pas de limite inférieure au diamètre moyen des particules du sel brut broyé, on n'a pas intérêt, en pratique, à broyer trop fin, pour des considérations économiques et pour ne pas handicaper la suite du procédé. En pratique, il est dès lors avantageux que le sel brut recueilli du broyage présente un diamètre moyen supérieur à 25 μm, de préférence à 50 μm. Les diamètres moyens de 100 à 150 μm sont recommandés. De bons résultats sont obtenus lorsque le diamètre moyen du sel brut recueilli du broyage est sensiblement compris entre 100 et 150 μm, le diamètre de coupure étant compris entre 80 et 150 μm, de préférence au moins égal à 100 μm.

Le fractionnement granulométrique de la poudre du brouet peut être réalisé par tout moyen connu approprié. Selon une première forme d'exécution, le brouet aqueux est filtré ou soumis à une décantation pour en extraire la poudre que l'on soumet ensuite à un séchage et un tamisage. Dans une autre forme d'exécution, qui est préférée, le fractionnement granulométrique de la poudre est réalisé par élutriation du brouet aqueux. L'élutriation est une technique d'analyse granulométrique bien connue (Particle Size Measurement, Terence Allen, Chapman and Hall, London, 1974, pages 250-263).

Dans une forme de réalisation avantageuse du procédé selon l'invention, le broyage du sel brut est suivi d'une séparation granulométrique, dans laquelle le sel broyé est réparti en une fraction granulométrique fine que l'on recueille et soumet au refroidissement dans la solution aqueuse de chlorure de sodium, et une fraction granulométrique grossière que l'on écarte ou recycle au broyage. Dans cette forme de réalisation du procédé selon l'invention, il est souhaitable que le diamètre de coupure du fractionnement granulométrique de la poudre comprenant le chlorure de sodium recristallisé ne soit pas inférieur de plus de 20 % (de préférence de plus de 10 %) par rapport au diamètre de coupure de la séparation granulométrique du sel brut broyé. De préférence, le diamètre de coupure du fractionnement granulométrique de la poudre comprenant le chlorure de sodium recristallisé est au moins égal au diamètre de coupure de la séparation granulométrique du sel brut broyé. En général, on recommande de sélectionner un diamètre de coupure inférieur à 200 μm pour la séparation granulométrique du sel broyé. De bons résultats sont obtenus lorsque le diamètre de coupure de la séparation granulométrique du sel broyé est au maximum égal à 100 μm, le diamètre de coupure du fractionnement granulométrique de la poudre étant supérieur à 80 μm, de préférence au moins égal à 100 μm.

Dans une autre forme de réalisation avantageuse du procédé selon l'invention, l'eau mère recueillie du brouet après séparation de la poudre est utilisée pour reconstituer la solution aqueuse saturée de chlorure de sodium utilisée pour le refroidissement du sel brut broyé. Dans cette forme de réalisation du procédé selon l'invention, il est souhaitable de soumettre l'eau mère à une épuration pour en éliminer une fraction au moins des impuretés dissoutes. En pratique, la fraction à éliminer est sensiblement égale à la quantité molaire des impuretés présentes dans le sel brut mis en oeuvre. Dans le cas particulier d'un sel brut d'origine minérale (par exemple le sel gemme), l'eau mère est habituellement contaminée par des ions calcium, magnésium et sulfate, provenant des impuretés principales du sel brut (sulfate de calcium, polyhalite). Dans ce cas particulier, l'épuration de l'eau mère comprend habituellement une addition d'hydroxyde de sodium ou de calcium pour cristalliser et précipiter le magnésium à l'état d'hydroxyde de magnésium et une addition de chlorure de calcium pour cristalliser et précipiter les ions sulfate à l'état de gypse. Les quantités respectives d'hydroxyde de sodium ou de calcium et de chlorure de calcium sont sensiblement égales aux quantités nécessaires pour précipiter les ions calcium, magnésium et sulfate du sel brut mis en oeuvre.

Comme exposé plus haut, on préfère, selon l'invention, recristalliser le chlorure de sodium dihydraté en chlorure de sodium anhydre, avant de soumettre la poudre du brouet au fractionnement granulométrique. Dans une variante particulière de cette forme d'exécution préférée du procédé selon l'invention, la recristallisation du chlorure de sodium dihydraté en chlorure de sodium anhydre est réalisée dans un cristalliseur où on réalise simultanément une classification granulométrique en deux classes granulométriques et une évacuation de celle de ces deux classes, qui est la plus fine. Dans cette variante d'exécution particulière du procédé selon l'invention, le diamètre de coupure des deux classes granulométriques est approximativement égal au diamètre moyen des cristaux de chlorure de sodium anhydre, recristallisé.

Dans la forme d'exécution particulière qui vient d'être décrite, la recristallisation et la classification granulométrique simultanée sont avantageusement réalisées dans un lit fluidisé de cristaux de chlorure de sodium se trouvant à une température inférieure à la température de transition précitée (dans le cas de la cristallisation de chlorure de sodium dihydraté) ou à une température supérieure à ladite température de transition (dans le cas de la cristallisation de chlorure de sodium anhydre). Par passage dans le lit fluidisé, le chlorure de sodium du brouet recristallise à l'état de chlorure de sodium dihydraté ou de chlorure de sodium anhydre selon la température du lit. La fluidisation du lit est réglée de manière que la poudre du brouet s'y répartisse en deux fractions granulométriques, dont l'une (la fraction grossière) est recueillie à la partie inférieure du lit et dont l'autre (la fraction granulométrique fine) est entraînée vers le haut, hors du lit. Dans cette forme de réalisation du procédé selon l'invention, la fluidisation des cristaux du lit est réalisée par une circulation ascendante du brouet à travers le lit. En variante, pour faciliter la fluidisation du lit, il est avantageux de diluer le brouet dans une solution aqueuse saturée de chlorure de sodium. Dans cette variante de l'invention, la solution aqueuse utilisée pour diluer le brouet est avantageusement une solution aqueuse qui est séparée de la fraction granulométrique fine recueillie à la partie supérieure du lit.

Des particularités et détails de l'invention vont apparaître au cours de la description suivante des dessins annexés, qui sont des schémas d'installations pour la mise en oeuvre de quelques formes d'exécution du procédé selon l'invention.

La figure 1 est un schéma d'une installation pour la mise en oeuvre d'une première forme d'exécution du procédé selon l'invention;

La figure 2 est un schéma d'une installation pour la mise en oeuvre d'une seconde forme d'exécution du procédé selon l'invention;

La figure 3 montre un détail d'une variante de réalisation de l'installation de la figure 2.

La figure 4 montre un détail d'une autre variante de réalisation de l'installation de la figure 2.

Dans ces figures, des mêmes notations de référence désignent des éléments identiques.

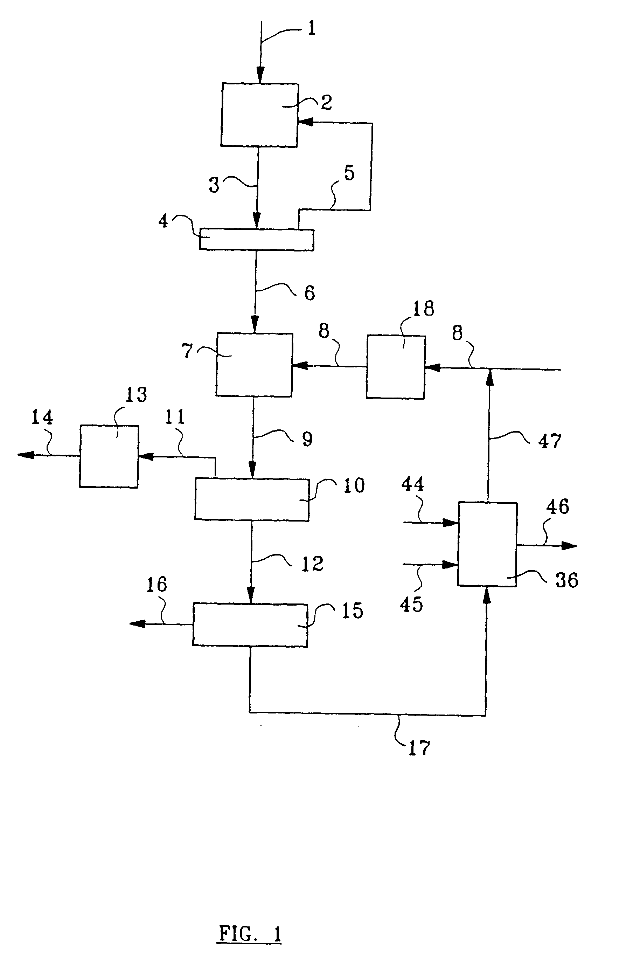

Dans l'installation représentée à la figure 1, du sel brut 1 (par exemple du sel gemme) est introduit dans un broyeur 2, duquel on soutire du sel brut broyé 3. Le sel brut broyé 3 est envoyé sur un crible 4, où on le sépare en deux fractions granulométriques 5 et 6. Le crible 4 est choisi de manière que le diamètre de coupure des deux fractions granulométriques soit sensiblement égal à 100 μm. La fraction granulométrique grossière 5 est recyclée dans le broyeur 2 et la fraction granulométrique fine 6 est envoyée dans une chambre de cristallisation 7. La chambre de cristallisation 7 est par ailleurs alimentée avec une solution aqueuse saturée de chlorure de sodium 8, provenant d'un réfrigérant 18, où elle a été refroidie à une température inférieure à la température de transition du chlorure de sodium anhydre en chlorure de sodium dihydraté (par exemple à une température située entre -5 et -10 °C). Dans la chambre de cristallisation 7, le sel solide 6 est dispersé dans la solution froide 8, ce qui a pour résultat de provoquer la recristallisation du chlorure de sodium anhydre en chlorure de sodium dihydraté. On soutire de la chambre de cristallisation 7, un brouet aqueux 9 d'une poudre contenant des cristaux de chlorure de sodium dihydraté. On envoie le brouet 9 sur un tamis calibré 10, où la poudre est séparée en deux fractions granulométriques 11 et 12 présentant un diamètre de coupure d'environ 100 µm. La fraction granulométrique grossière 11, retenue sur le tamis, comprend du sel enrichi en chlorure de sodium (à l'état dihydraté). Elle est envoyée dans un réchauffeur 13 où on la chauffe jusqu'à la température ambiante, ce qui a pour résultat de provoquer la recristallisation du chlorure de sodium dihydraté en chlorure de sodium anhydre. Le sel enrichi 14 recueilli du réchauffeur 13 est transféré dans une installation de séchage non représentée.

Le brouet 12 recueilli sous le tamis calibré 10 contient la fraction granulométrique fine de la poudre, constituée pour l'essentiel des impuretés du sel. Il est envoyé sur un filtre 15, pour en séparer une fraction solide 16 et une eau mère 17.

L'eau mère 17 est contaminée par des impuretés dissoutes, notamment du sulfate de sodium et du sulfate de magnésium provenant de la polyhalite du sel gemme. Elle est envoyée dans une chambre d'épuration 36, où on y ajoute de l'hydroxyde de sodium 44 et du chlorure de calcium 45. On recueille de la chambre d'épuration 36, d'une part un précipité 46 d'hydroxyde de magnésium et de sulfate de calcium dihydraté que l'on élimine et, d'autre part, une solution aqueuse de chlorure de sodium 47 que l'on envoie dans la solution aqueuse 8, en amont du réfrigérant 18.

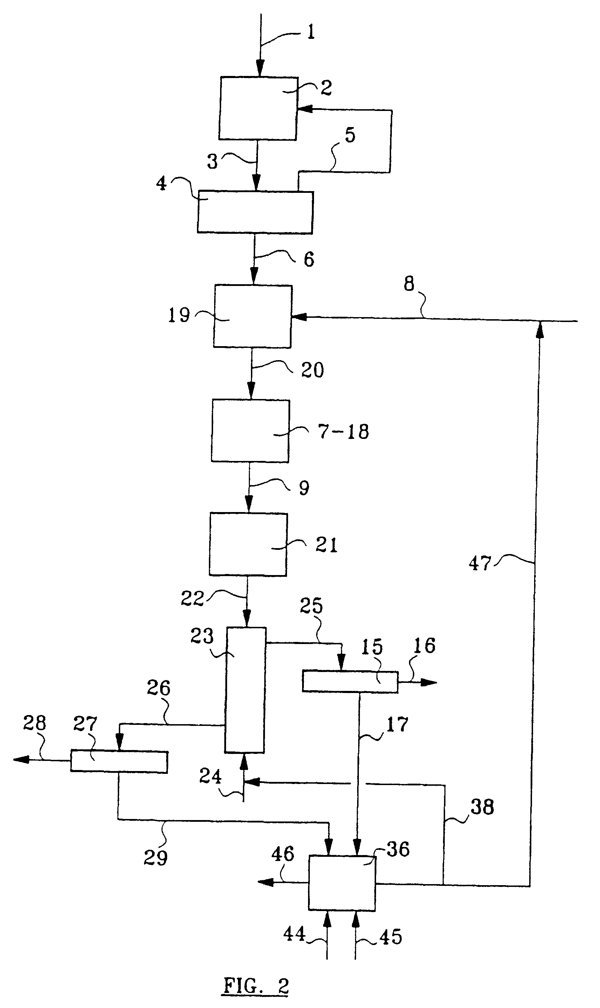

Dans l'installation de la figure 2, le réfrigérant 18 est incorporé dans la chambre de cristallisation 7. L'installation comprend en outre une chambre de mélange 19 en amont de la chambre de cristallisation 7. La chambre de mélange 19 est alimentée avec la fraction fine 6 de sel brut et avec la solution aqueuse saturée de chlorure de sodium 8, à la température ambiante. On recueille de la chambre de mélange 19 une suspension sensiblement homogène 20, à la température ambiante, que l'on introduit telle quelle dans la chambre de refroidissement et de cristallisation 7-18. Dans celle-ci, la suspension aqueuse 20 est refroidie au-dessous de la température de transition du chlorure de sodium anhydre en chlorure de sodium dihydraté. On recueille de la chambre 7-18, un brouet aqueux 9 de cristaux de chlorure de sodium dihydraté, que l'on introduit dans une chambre de réchauffage 21, où il est porté à une température voisine de la température ambiante. Dans la chambre 21, le chlorure de sodium dihydraté du brouet recristallise à l'état de chlorure de sodium anhydre et on recueille un brouet 22 de cristaux de chlorure de sodium anhydre. Le brouet 22 est transféré au sommet d'une colonne d'élutriation 23, du type à lévigation, où on le soumet à l'action d'un courant ascendant 24 d'eau ou d'une solution aqueuse sensiblement saturée de chlorure de sodium. La vitesse du courant de lévigation 24 est réglée de manière à fractionner la poudre du brouet en deux fractions granulométriques distinctes dont le diamètre de coupure est sensiblement égal à 100 µm. En tête de la colonne 23, on recueille une part 25 du brouet, contenant la fraction granulométrique fine de la poudre et, au pied de la colonne, on recueille la part 26 du brouet contenant la fraction granulométrique grossière de la poudre. La part 26 est traitée sur un filtre 27, duquel on recueille du sel enrichi 28 que l'on envoie dans une installation de séchage non représentée, et une eau mère 29.

La part 25 du brouet, contenant la fraction fine est traitée sur le filtre 15 pour en séparer une fraction solide 16 et une eau mère 17.

Les eaux mères 17 et 29 sont contaminées par des impuretés dissoutes, notamment du sulfate de sodium et du sulfate de magnésium provenant de la polyhalite du sel gemme. Elles sont collectées dans une chambre d'épuration 36, où on y ajoute de l'hydroxyde de sodium 44 et du chlorure de calcium 45. On recueille de la chambre d'épuration 36, d'une part un précipité 46 d'hydroxyde de magnésium et de sulfate de calcium dihydraté que l'on élimine et, d'autre part, une solution aqueuse de chlorure de sodium dont une partie 47 est envoyée dans la solution aqueuse 8 et dont une autre partie 38 est envoyée dans le courant de lévigation 24.

Dans une variante (non représentée) de l'installation de la figure 2, les eaux mères 17 et 29 sont envoyées telles quelles dans la chambre de mélange 19, sans passer par la chambre d'épuration 36, et les réactifs 44 et 45 sont introduits dans la chambre de mélange 19.

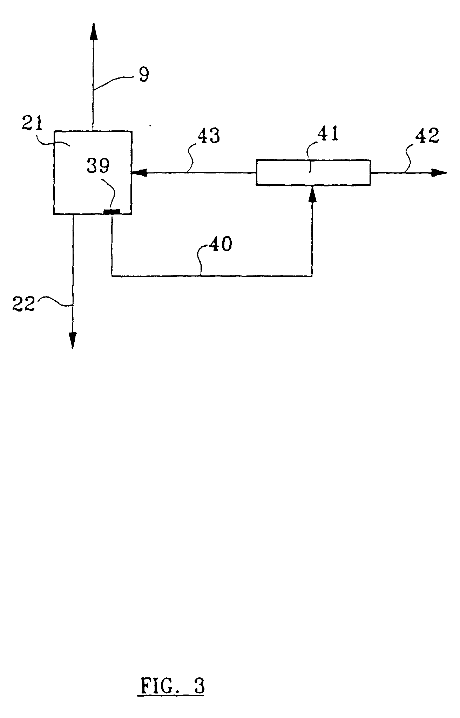

La figure 3 montre un détail d'une forme de réalisation modifiée de l'installation de la figure 2. Dans cette forme de réalisation modifiée, la chambre de réchauffage 21 incorpore un classificateur granulométrique, comprenant par exemple un crible schématisé en 39. Dans cette installation modifiée, on soutire en continu une fraction 40 du milieu en cours de cristallisation, en la faisant passer au travers du crible 39, de manière à retenir dans la chambre 21 les cristaux de chlorure de sodium anhydre qui ont recristallisé. En aval du crible 39, la fraction 40 est traitée sur un filtre 41 pour en séparer des fines particules solides 42 que l'on écarte ou recycle dans le broyeur 2 et une solution aqueuse 43 que l'on recycle dans la chambre 21. Dans l'installation de la figure 3, le crible 39 est choisi de manière qu'il présente approximativement le même diamètre de coupure que celui réalisé dans la colonne d'élutriation 23. Cette installation conforme à l'invention présente ainsi la particularité de réduire la quantité de très fines particules d'impuretés dans la chambre 21, susceptibles de constituer des germes de cristallisation parasite pour le chlorure de sodium anhydre. Elle renforce de la sorte le degré de pureté du sel enrichi 28.

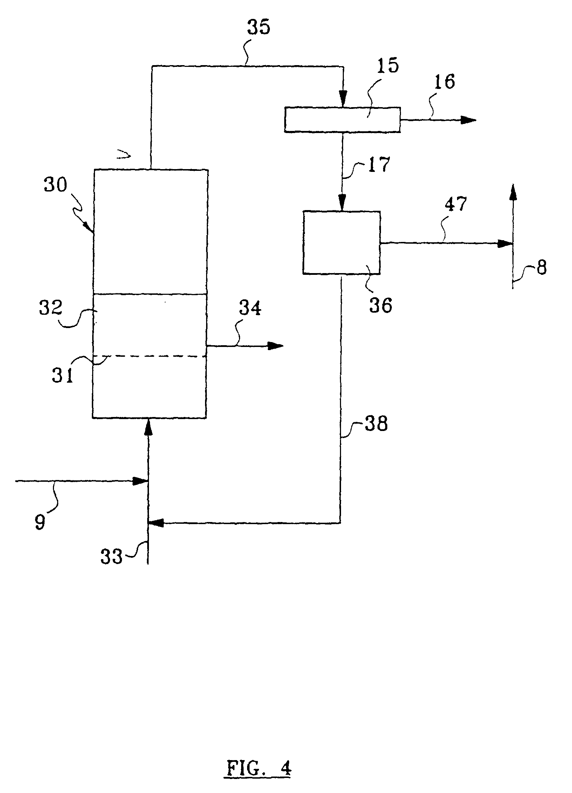

La figure 4 montre un détail d'une autre forme de réalisation modifiée de l'installation de la figure 2. Dans cette forme de réalisation modifiée, la chambre de réchauffage 21 et la colonne d'élutriation 23 de la figure 2 sont remplacées par un dispositif comprenant (figure 4) un cristalliseur 30 du type à lit fluidisé. Le cristalliseur 30 comprend, au-dessus d'une grille de fluidisation 31, un lit 32 de cristaux de chlorure de sodium que l'on fluidise par un courant ascendant d'une solution aqueuse saturée de chlorure de sodium 33. Les cristalliseurs du type à lit fluidisé sont bien connus en technique (GIVAUDON, Massot et BENSIMONT-"Précis de génie chimique" - Tome 1 - 1960 - Berger-Levrault, Nancy - pages 353 à 370). Dans le cristalliseur 30, le lit de cristaux 32 est maintenu à la température ambiante. Le brouet 9 de cristaux de chlorure de sodium dihydraté est introduit dans le courant de fluidisation 33 et entraîné avec celui-ci dans le lit 32. Dans le lit 32, le chlorure de sodium dihydraté du brouet recristallise à l'état de chlorure de sodium anhydre. La vitesse du courant de fluidisation 33 est réglée de manière à soumettre le brouet à une séparation granulométrique par lévigation, de telle sorte que les grosses particules sédiment dans le lit et soient recueillies en 34 à la partie inférieure du lit, tandis que les fines particules soient entraînées hors du lit et recueillies à la partie supérieure du cristalliseur, à l'état d'une dispersion 35 dans la solution de fluidisation. Les particules 34 sont traitées dans un sécheur, non représenté, et constituent le sel enrichi. La dispersion aqueuse 35 est traitée sur le filtre 15 duquel on extrait un gâteau de filtration 16, que l'on écarte et une eau mère 17 que l'on recueille dans la chambre d'épuration 36 où elle est soumise à une épuration en magnésium et en sulfate, comme exposé plus haut. Une partie (47) de l'eau mère épurée est recyclée dans la solution saturée 8 (Figure 2) et une autre partie (38) est envoyée dans le courant de fluidisation 33.

Les exemples suivants servent à illustrer l'invention.

<u>Exemple 1</u>

Le procédé selon l'invention a été appliqué à l'enrichissement de sel gemme originaire de la mine de Borth en Allemagne. Les teneurs en impuretés principales (calcium, magnésium et ions sulfate) du sel brut extrait de la mine sont mentionnées ci-dessous

| | |
|---|---|
| Eau | 0,122 g/kg |
| Calcium (exprimé en $CaSO_4$) | 12,38 g/kg (sel sec) |
| Magnésium (exprimé en $MgSO_4$) : | 1,44 g/kg (sel sec) |
| Ions $SO_4$ (exprimé en $Na_2SO_4$, après déduction du $MgSO_4$ et du $CaSO_4$) | 2,77 g/kg (sel sec) |
| Autres impuretés insolubles | 0,68 g/kg (sel sec) |
| Chlorure de sodium | 982,73 g/kg (sel sec) |

Le sel a été broyé puis traité sur un crible, pour en éliminer les fractions granulométriques supérieures à 100 μm. La fraction granulométrique inférieure à 100 μm (le passé du crible) a été récupérée et soumise au procédé selon l'invention. A cet effet, une partie du sel a été dissoute dans de l'eau, de manière à former une solution aqueuse saturée en chlorure de sodium. Après filtration de la solution, pour en éliminer les matières insolubles, on y a dispersé une autre partie du sel, de poids sensiblement égal à 1/9 du poids de la solution. Le brouet aqueux résultant a été homogénéisé par agitation, à la température ambiante, puis on l'a introduit dans une enceinte thermostatisée, où on l'a refroidi progressivement jusqu'à environ -10 °C, pendant un temps suffisant pour obtenir une recristallisation complète du chlorure de sodium anhydre en chlorure de sodium dihydraté. On a ensuite remonté progressivement la température dans l'enceinte jusqu'à la température ambiante, pour recristalliser le chlorure de sodium dihydraté en chlorure de sodium anhydre. Le brouet a ensuite été extrait de l'enceinte et filtré. Après séchage, le gâteau de filtration a été séché puis traité sur un crible pour le fractionner en deux classes granulométriques présentant un diamètre de coupure de 100 μm. La classe granulométrique inférieure à 100 μm a été écartée et la classe granulométrique supérieure à 100 μm a été recueillie. Celle-ci représentait 71,8 % du poids total du gâteau (poids sur produit sec). Sa composition est reprise ci-dessous :

| | |
|---|---|
| Eau | 0,165 g/kg |
| Calcium (exprimé en $CaSO_4$) | 1,8 g/kg (sel sec) |
| Magnésium (exprimé en $MgSO_4$) | 0,012 g/kg (sel sec) |
| Ions $SO_4$ | 0,064 g/kg (sel sec) |
| Autres impuretés insolubles | 0,048 g/kg (sel sec) |
| Chlorure de sodium | 998,08 g/kg (sel sec) |

On observe que le procédé a réalisé un enrichissement appréciable du sel, dont la teneur pondérale en chlorure de sodium dépasse 99,8 %.

Exemple 2

On a répété l'essai de l'exemple 1 avec du sel gemme, broyé sous 100 µm, présentant les teneurs respectives suivantes en ions calcium, magnésium et sulfate:

| Calcium | 3,84 g/kg |
|---------|-----------|
| Magnésium | 0,32 g/kg |
| Sulfate | 11,9 g/kg |

Le sel a subi le même traitement qu'à l'exemple 1, le refroidissement ayant été effectué à une température de -7 °C (cristallisation du chlorure de sodium dihydraté) et le réchauffement ayant été opéré à la température de +7 °C (cristallisation dü chlorure de sodium anhydre).
Le sel recueilli après le traitement final sur le crible de 100 µm et l'élimination de la fraction granulométrique fine a été analysé quant à ses teneurs en calcium, magnésium et ions $SO_4$:

| Calcium | 0,75 g/kg |
|---------|-----------|
| Magnésium | 0,0 g/kg |
| Sulfate | 1,6 g/kg |

Exemple 3

Dans cet exemple, la cristallisation du chlorure de sodium anhydre et la classification granulométrique subséquente ont été effectuées dans un lit fluidisé tel que décrit plus haut en référence à la figure 4. Les autres conditions de l'essai ont été identiques à celles de l'exemple 2. Le sel épuré a été analysé quant à ses teneurs en calcium et ions $SO_4$ :

| Calcium | 0,21 g/kg |
|---------|-----------|
| Sulfate | 0,9 g/kg |

**Revendications**

1. Procédé d'enrichissement de sel brut, selon lequel on soumet le sel brut à un refroidissement dans une solution aqueuse saturée de chlorure de sodium, à une température inférieure à la température de transition du chlorure de sodium anhydre et du chlorure de sodium dihydraté et on recueille, à l'issue du refroidissement, un brouet d'une poudre comprenant des cristaux de chlorure de sodium, **caractérisé en ce qu'**on soumet le sel brut à un broyage avant de le refroidir et on soumet la poudre à un fractionnement granulométrique duquel on recueille une fraction granulométrique fine et une fraction granulométrique grossière comprenant le sel enrichi.

2. Procédé selon la revendication 1, **caractérisé en ce qu'**avant de soumettre la poudre au fractionnement granulométrique, on chauffe le brouet à une température supérieure à la température de transition précitée.

3. Procédé selon la revendication 1 ou 2, **caractérisé en ce que** la solution aqueuse saturée de chlorure de sodium comprend une eau mère séparée du brouet.

4. Procédé selon l'une quelconque des revendications 1 à 3, **caractérisé en ce que** le fractionnement granulométrique de la poudre comprend un tamisage ou une élutriation.

5. Procédé selon l'une quelconque des revendications 1, 3 et 4, **caractérisé en ce que** le fractionnement granulométrique comprend une élutriation que l'on exécute dans un lit fluidisé de cristaux de chlorure de sodium à une température supérieure à la température de transition précitée.

6. Procédé selon l'une quelconque des revendications 1 à 5, **caractérisé en ce qu'**on règle le broyage pour que les particules de sel brut recueillies du broyage présentent un diamètre moyen inférieur au diamètre moyen des cristaux de chlorure de sodium de la poudre.

**7.** Procédé selon la revendication 6, **caractérisé en ce qu'**on règle le fractionnement granulométrique de telle sorte que la fraction granulométrique fine et la fraction granulométrique grossière présentent un diamètre de coupure sensiblement égal au diamètre moyen des particules de sel brut après le broyage.

**8.** Procédé selon l'une quelconque des revendications 1 à 7, **caractérisé en ce que** le sel brut recueilli du broyage est soumis à une séparation granulométrique de laquelle on recueille une fraction granulométrique fine que l'on soumet au refroidissement dans la solution aqueuse de chlorure de sodium, et une fraction granulométrique grossière que l'on écarte.

**9.** Procédé selon la revendication 8, **caractérisé en ce que** le diamètre de coupure du fractionnement granulométrique de la poudre n'est pas inférieur de plus de 20 % par rapport au diamètre de coupure de la séparation granulométrique du sel brut recueilli du broyage.

**10.** Procédé selon la revendication 9, **caractérisé en ce que** le diamètre de coupure de la séparation granulométrique du sel recueilli du broyage est au maximum égal à 100 μm, le diamètre de coupure du fractionnement granulométrique de la poudre étant au moins égal à 100 μm.


**Patentansprüche**

**1.** Verfahren zur Anreicherung von Rohsalz, gemäß dem man das Rohsalz in einer gesättigten wässrigen Natriumchloridlösung auf eine Temperatur, die niedriger als die Übergangstemperatur von wasserfreiem Natriumchlorid und Natriumchlorid Dihydrat ist, abkühlt und man am Ende des Abkühlens eine Brühe aus einem Pulver, das Natriumchloridkristalle umfasst, gewinnt, **dadurch gekennzeichnet, dass** man das Rohsalz vor seinem Abkühlen zerkleinert und man das Pulver granulometrisch fraktioniert, woraus man eine feine Korngrößenfraktion und eine grobe Korngößenfraktion, die das angereicherte Salz umfasst, gewinnt.

**2.** Verfahren gemäß Anspruch 1, **dadurch gekennzeichnet, dass** man, bevor man das Pulver granulometrisch fraktioniert, die Brühe auf eine Temperatur, die höher als die oben angeführte Übergangstemperatur ist, erwärmt.

**3.** Verfahren gemäß Anspruch 1 oder 2, **dadurch gekennzeichnet, dass** die gesättigte wässrige Natriumchloridlösung eine von der Brühe abgetrennte Mutterlauge umfasst.

**4.** Verfahren gemäß einem der Ansprüche 1 bis 3, **dadurch gekennzeichnet, dass** die granulometrische Fraktionierung des Pulvers ein Sieben oder ein Strömungssichten umfasst.

**5.** Verfahren gemäß einem der Ansprüche 1, 3 und 4, **dadurch gekennzeichnet, dass** die granulometrische Fraktionierung ein Strömungssichten umfasst, das man in einem Fließbett aus Natriumchloridkristallen bei einer Temperatur, die höher als die oben angeführte Übergangstemperatur ist, ausführt.

**6.** Verfahren gemäß einem der Ansprüche 1 bis 5, **dadurch gekennzeichnet, dass** man das Zerkleinern einstellt, damit die aus dem Zerkleinern gewonnenen Rohsalzteilchen einen mittleren Durchmesser aufweisen, der kleiner als der mittlere Durchmesser der Natriumchloridkristalle des Pulvers ist.

**7.** Verfahren gemäß Anspruch 6, **dadurch gekennzeichnet, dass** man die granulometrische Fraktionierung so einstellt, dass die feine Korngrößenfraktion und die grobe Korngrößenfraktion einen Trenngrenzendurchmesser aufweisen, der etwa gleich dem mittleren Durchmesser der Rohsalzteilchen nach dem Zerkleinern ist.

**8.** Verfahren gemäß einem der Ansprüche 1 bis 7, **dadurch gekennzeichnet, dass** das aus dem Zerkleinern gewonnene Rohsalz granulometrisch getrennt wird, woraus man eine feine Korngrößenfraktion, die man in der wässrigen Natriumchloridlösung abkühlt, und eine grobe Korngrößenfraktion, die man verwirft, gewinnt.

**9.** Verfahren gemäß Anspruch 8, **dadurch gekennzeichnet, dass** der Trenngrenzendurchmesser bei der granulometrischen Fraktionierung des Pulvers nicht mehr als 20% kleiner, bezogen auf den Trenngrenzendurchmesser bei der granulometrischen Trennung des aus dem Zerkleinern gewonnen Rohsalzes, ist.

10. Verfahren gemäß Anspruch 9, **dadurch gekennzeichnet, dass** der Trenngrenzendurchmesser bei der granulometrischen Trennung des aus dem Zerkleinern gewonnenen Salzes höchstens gleich 100 µm beträgt, wobei der Trenngrenzendurchmesser bei der granulometrischen Fraktionierung des Pulvers wenigstens gleich 100 µm beträgt.

**Claims**

1. Process for enriching crude salt, in which the crude salt is cooled in a saturated aqueous sodium chloride solution to a temperature below the anhydrous sodium chloride to sodium chloride dihydrate transition temperature and, after cooling, a stock of a powder comprising sodium chloride crystals is collected, **characterized in that** the crude salt is ground before it is cooled and the powder is subjected to particle-size fractionation from which a fine particle-size fraction and a coarse particle-size fraction comprising the enriched salt are collected.

2. Process according to Claim 1, **characterized in that**, before the powder is subjected to particle-size fractionation, the stock is heated to a temperature above the aforementioned transition temperature.

3. Process according to Claim 1 or 2, **characterized in that** the saturated aqueous sodium chloride solution comprises a mother liquor separated from the stock.

4. Process according to any one of Claims 1 to 3, **characterized in that** the particle-size fractionation of the powder comprises a screening step or an elutriation step.

5. Process according to any one of Claims 1, 3 and 4, **characterized in that** the particle-size fractionation comprises an elutriation step which is carried out in a fluidized bed of sodium chloride crystals at a temperature above the aforementioned transition temperature.

6. Process according to any one of Claims 1 to 5, **characterized in that** the grinding is set so that the crude-salt particles collected from grinding have a smaller mean diameter than the mean diameter of the sodium chloride crystals in the powder.

7. Process according to Claim 6, **characterized in that** the particle-size fractionation is set so that the fine particle-size fraction and the coarse particle-size fraction have a cut-off diameter approximately equal to the mean diameter of the crude-salt particles after grinding.

8. Process according to any one of Claims 1 to 7, **characterized in that** the crude salt collected from grinding is subjected to particle-size separation from which are collected a fine particle-size fraction, which is cooled in the aqueous sodium chloride solution, and a coarse particle-size fraction which is removed.

9. Process according to Claim 8, **characterized in that** the cut-off diameter for particle-size fractionation of the powder is no more than 20% less than the cut-off diameter for particle-size separation of the crude salt collected from grinding.

10. Process according to Claim 9, **characterized in that** the cut-off diameter for particle-size separation of the salt collected from grinding is at most equal to 100 µm, the cut-off diameter for particle-size fractionation of the powder being at least equal to 100 µm.

FIG. 1

FIG. 2

FIG. 3

FIG. 4